# EUROPEAN PATENT APPLICATION

(11) **EP 4 717 947 A1**
(43) Date of publication of application: **01.04.2026**
(21) Application number: 24203529.3
(22) Date of filing: 30.09.2024
(51) Int. Cl.: F16H 57/04, F16H 48/10

(54) **TORQUE DISTRIBUTION GEARING FOR A VEHICLE**

(71) Applicant: ZF Friedrichshafen AG, 88046 Friedrichshafen (DE)
(72) Inventor: Kong, Yunlai, Shanghai, 201615 (CN)
(74) Representative: WBH Wachenhausen Patentanwälte PartG mbB

(57) **Abstract**

A torque distribution gearing (2) for a vehicle is configured to distribute a torque of an input shaft between a first and a second output shaft. The torque distribution gearing comprises a rotating element (10), a housing accommodating the rotating element and a lubrication system (3) for collecting lubricant churned by the rotating element as it rotates so as to change a lubricant level in the housing from a first lubricant level (61) to a second lubricant level (62). The first lubricant level is a lubricant level at which a lubricant volume present in the housing settles under the influence of gravity when the torque distribution gearing is inoperative for an extended period of time. The lubricant at the first lubricant level at least partially covers the rotating element. The lubricant at the second lubricant level covers the rotating element less than at the first lubricant level.

## Description

### Technical field

The present disclosure refers to a torque distribution gearing for a vehicle, a vehicle with a torque distribution gearing and a method for controlling a lubrication system for a torque distribution gearing.

### Prior art

Torque distribution gearings for vehicles are known. In some cases, the torque distribution gearing is provided with a lubrication system for lubricating elements of the torque distribution gearing. In such gearings, elements of the torque distribution gearing rotating at least partly in lubricant may cause significant drag losses under certain conditions.

### Summary of the invention

The present disclosure relates in a first aspect to a torque distribution gearing for a vehicle. Examples for the vehicle may include a car, a truck, a bus and a working vehicle. Examples for the working vehicle may include a tractor, a combine harvester, a communal vehicle like a street sweeping machine, an excavator, a grader and a loader. The torque distribution gearing is configured to distribute a torque of an input shaft between a first output shaft and a second output shaft. The vehicle may comprise a driving unit for directly or indirectly driving the input shaft. The driving unit may comprise an internal combustion engine and/or an electric motor. The driving unit may receive electric energy from an energy storage, for example a tank or a battery, and convert it to rotational mechanical energy, for example to a driving torque for the input shaft. The vehicle may comprise a shiftable transmission disposed in a torque flow between the driving unit and the torque distribution gearing. Each output shaft of the torque distribution gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The drive element may be, for example, a wheel for contacting the ground or a drive wheel or sprocket for tracks.

The torque distribution gearing comprises a rotating element and a housing accommodating the rotating element. The torque distribution gearing may be configured for converting an input value into an output value. For example, the torque distribution gearing may be able to convert an input rotational speed into a lower or higher out rotational speed and an input torque into a higher or lower output torque. The torque distribution gearing may comprise one or more gear sets configured to convert torques and rotational speeds from one value to another. The gear set or sets may be formed as spur gears, planetary gears, bevel gears or other suitable gears. The rotating element may be an element of a gear set. For example, the torque distribution gearing may comprise a planetary gear set and the rotating element may be a sun gear, a planetary gear or a ring gear. The housing may be provided as one or several casings for enclosing stationary and/or rotational components of the torque distribution gearing. The housing may also be configured as a stationary member for providing support and for receiving forces and torques. The housing may comprise several detachable housing portions, with each housing portion accommodating and supporting different components. For example, the housing may comprise a housing portion for enclosing and rotatably supporting the rotating element. For example, the housing may comprise a separate housing portion for enclosing and rotatably supporting the driving unit. The two exemplary housing portions may be mounted to each other.

The torque distribution gearing comprises a lubrication system. The lubrication system may comprise components for providing lubricant and for controlling and directing flows of lubricant to and from parts of the torque distribution gearing. Examples for such components may include pumps, channels, reservoirs and switching valves. The lubricant may be configured for lubricating and/or cooling components of the torque distribution gearing. The lubricant may also be provided for lubricating and/or cooling parts of the housing and/or parts of the driving unit. For example, the lubricant may also be configured for cooling an electric machine and an inverter for the electric machine. In one embodiment, the lubrication system comprises lubricant. In one embodiment, the lubricant is oil. In one embodiment, the amount of lubricant is set such that, in operation of the torque distribution gearing, at least a thin film of lubricant is present between any two elements that contact each other under relative movement during regular operation of the torque distribution gearing. Such surfaces may include contact surfaces between gear teeth as well as running surfaces of bearings.

The lubrication system is configured for collecting lubricant of the torque distribution gearing churned by the rotating element as the rotating element rotates so as to change a lubricant level in the housing from a first lubricant level to a second lubricant level. The first lubricant level is a lubricant level at which a lubricant volume present in the housing settles under the influence of gravity when the torque distribution gearing is inoperative for an extended period of time. Generally, during operation of a lubricated machine the lubricant is distributed to different locations around the machine by distribution means, for example baffles or pumps. After the machine and the distribution means are rendered inoperative, for example by being turned off or temporarily halted, the lubricant starts flowing downwards under the influence of gravity. This lubricant gathers at the bottom of the machine, for example in an internal volume of the housing and any other volumes that are hydraulically coupled to the internal volume of the housing. As a result, a lubricant level in the housing gradually increases after the machine is rendered inoperative. If the machine is left inoperative for a sufficiently long period of time, the lubricant level in the housing settles at the first lubricant level, at which further gathering of lubricant in the housing is not present or is negligible.

The lubricant at the first lubricant level at least partially covers the rotating element. The lubricant at the second lubricant level covers the rotating element less than at the first lubricant level. Churning generally arises when a rotating part is partially immersed in lubricant such that the entering and exiting of the rotating part into and out of the lubricant churns or splashes lubricant into a surrounding environment, for example air. This may occur at the first lubricant level with the rotating element entering the lubricant. The churning of the rotating element results in drag losses and churning losses, generating a drag torque that acts on the rotating element opposite to a rotation direction of the rotating element. The drag torque increases with increased immersion depth and also with increased viscosity of the lubricant. Accordingly, the churning generally results in churning losses proportional to the immersion depth of the rotating element. The immersion depth is generally greatest after the machine has been inoperative for an extended period of time and the lubricant has gathered near the bottom of the housing, thereby being at the highest lubricant level. Furthermore, the churning losses are generally exacerbated at lower temperatures due to increases in viscosity of the lubricant. In addition, if the temperature is too low, for example -30°C or less, a lubricant pump, if present, cannot be operated or can only be operated at decreased efficiency. Due to the inoperability of the lubricant pump, lubricant cannot be removed from the housing such that the immersion depth and the corresponding churning losses remain until the temperature increases sufficiently for properly operating the lubricant pump.

With the torque distribution gearing according to the first aspect, the churning of the lubricant caused by the rotation of the rotating element is used for creating a flow of lubricant that allows collection of the lubricant by the lubrication system. The collected lubricant is effectively removed from the housing. As a result, the lubricant level in the housing is reduced from the first lubricant level to the second lubricant level. Consequently, the immersion depth of the rotating element is quickly reduced during operation, thereby reducing churning losses. This occurs independently of any lubricant pump, such that the advantageous effect is achieved in a passive manner. Hence, churning losses are also reduced even when a lubricant pump, if present, is not operable, for example due to low temperatures. By reducing churning losses, overall efficiency of the torque distribution gearing is improved. Accordingly, the first aspect of the present disclosure provides a torque distribution gearing with a high overall efficiency.

In an embodiment, the rotating element comprises a churning structure or multiple churning structures formed at a lubricant facing surface of the rotating element. The churning structure is configured to increase a churning rate caused by rotation of the rotating element. The churning rate may reflect an amount of lubricant churned by the rotating element per unit of time. The lubricant facing surface of the rotating element may be a radially outer surface of the rotating element. The churning structure may comprise a blade, a bucket and/or another element suitable for increasing the churning rate. By increasing the churning rate, more lubricant can be churned and collected by the lubrication system. The churning structure thus results in a greater reduction of lubricant level in the housing, such that the second lubricant level is reached faster. Thereby, overall efficiency is high.

In an embodiment, the lubricant at the second lubricant level does not cover the rotating element. As a result, churning losses by the rotating element are eliminated. Thereby overall efficiency is high.

In an embodiment, the lubrication system comprises a first chamber for collecting the lubricant churned by the rotating element as the rotating element rotates in a first direction. The first chamber may be provided at a location, to which the churned lubricant flows or splashes depending on forces acting on the lubricant, for example inertial forces and centrifugal forces. As an example, the first chamber may be provided close to the rotating element in a radial direction and may comprise an opening in a circumferential direction. The opening may face the circumferential direction opposite to the first direction, in which the rotating element rotates, such that the churned lubricant can freely enter the chamber and be collected therein. The first chamber may be formed integrally in the housing or as a separate component attached to the housing.

The lubrication system further comprises a lubricant distribution unit for distributing the lubricant from the first chamber, and a first channel for supplying the lubricant from the first chamber to the lubricant distribution unit. The lubricant distribution unit may comprise baffles, channels and other structures for directing flow of lubricant to and/or through lubricated components of the torque distribution gearing. For example, the lubricant distribution unit may comprise a baffle connected to a component of the torque distribution gearing for directing flow of lubricant into distribution channels for distributing the lubricant throughout the component. The lubricated components may comprise gears, bearings and other contact surfaces with or without relative motion therebetween. The lubricated components may further include stationary components that are cooled as described above, with or without the necessity for lubrication due to relative motion. The first channel may provide fluid communication between the first chamber and the lubricant distribution unit. The first channel may be formed integrally in the housing or as a separate component attached to the housing.

A usable volume of the first chamber before lubricant flows into the first channel is equal to or greater than a change in the lubricant volume present in the housing between the first lubricant level and the second lubricant level. With this sufficiently large usable volume of the first chamber, the lubrication system ensures that the lubricant churned by the rotating element and collected by the first chamber remains removed from the lubricant volume in the housing. As a result, the reduction in lubricant level is maximized in view of the churned lubricant volume. Thus, churning losses are reduced as quickly as possible. Once the second lubricant level is reached, the first channel enables a flow of lubricant churned by the rotating element to be distributed for lubricating additional components. Thus, the torque distribution gearing can be lubricated in a passive manner while maintaining the high efficiency of the torque distribution gearing.

In an embodiment, the lubrication system comprises a second chamber for collecting lubricant churned by the rotating element as the rotating element rotates in a second direction, and a second channel for supplying lubricant from the second chamber to the lubricant distribution unit. The second direction may be a rotating direction of the rotating element opposite to the first direction. For example, the first direction may correspond to a forward driving of the vehicle and the second direction may correspond to a reverse driving of the vehicle. The second chamber may be formed in the same manner as the above-described first chamber or may be formed differently. For example, with respect to a vertical plane containing the axis of rotation of the rotating element, the second chamber may have plane symmetry with respect to the first chamber. The second chamber may be axially offset from the first chamber such that a lubricant flow towards one chamber is not inhibited by the other chamber being in the way. The second chamber and the second channel achieve the same effects as the first chamber and the first channel even when the torque distribution gearing is rotated in an opposite direction. Thereby, overall efficiency is high.

In an embodiment, the lubrication system comprises a sump for receiving lubricant, the sump being separate from the housing and in fluid communication with the housing. In view of the separation of the sump from the housing while maintaining fluid communication, the sump may serve as a reservoir for lubricant and facilitate the setting of a desired lubricant level. Therefore, the sump contributes to a high overall efficiency.

In an embodiment, the lubrication system comprises a lubricant pump for pumping lubricant from the sump and a supply channel for supplying lubricant from the lubricant pump to the lubricant distribution unit. The lubricant pump may contribute to the reduction of lubricant level in the housing by removing lubricant from the sump and the housing. Thus, the lubricant pump may contribute to a high overall efficiency. Furthermore, the lubricant pump allows for lowering the lubricant level even when the rotating element that churns lubricant for collection by the lubrication system is not covered by lubricant, such that churning losses of additional rotating elements other than the rotating element can also be reduced.

In an embodiment, the torque distribution gearing comprises a further rotating element. The lubrication system comprises a further chamber for collecting lubricant churned by the further rotating element as the further rotating element rotates. The lubrication system comprises a lubricant drain channel for draining lubricant from the further chamber into the sump. The further rotating element may be part of a gear set comprising the rotating element or part of another gear set. A direction of rotation of the further rotating element may be the same as the direction of rotation of the rotating element or opposite thereto. The further rotating element may be coaxial to the rotating element, or their axes of rotation may be parallelly offset, oblique or askew to each other. The further rotating element may be disposed in a different vertical plane then the rotating element. As one example, the rotating element may be part of a first planetary gear set of the torque distribution gearing, and the further rotating element may be part of a second planetary gear set of the torque distribution gearing, with the first or second planetary gear sets being axially adjacent to each other. The further chamber may be formed in a manner similar to the first chamber or in a different manner suitable for collecting churned lubricant. The further chamber may collect lubricant churned by the further rotating element and allow it to drain to the sump 1 via the lubricant drain channel. As a result, the further rotating element removes lubricant from the housing via churning, thereby further lowering the lubricant level in the housing. Thereby, overall efficiency is high.

In an embodiment, the lubrication system comprises a further supply channel for supplying lubricant from the lubricant pump to a further lubricant distribution unit for distributing lubricant to the further rotating element. Thereby, the further rotating element is efficiently lubricated. In addition, since the lubricant pump removes lubricant from the sump, which is hydraulically coupled to the housing, the flow of lubricant from the sump to the further lubricant distribution unit assists in further lowering the lubricant level in the housing. Thereby, overall efficiency is high.

In an embodiment, the lubricant pump, the further chamber and the lubricant drain channel are configured to interact so as to change a lubricant level in the housing to a third lubricant level being a lubricant level, at which the lubricant does not cover the further rotating element. Thereby, churning losses by the further rotating element can be eliminated, resulting in high overall efficiency.

In an embodiment, the lubrication system comprises a further lubricant drain channel for draining lubricant into the sump from at least one of the first chamber, the second chamber, a housing accommodating the rotating element and a housing accommodating the further rotating element. The lubrication system may comprise none, some or all of the above-mentioned lubricant drain channels. In case a lubricant drain channel is provided for the first chamber, its hydraulic diameter may be configured such that lubricant is drained from the first chamber slower than it is churned into the first chamber by the rotating element. Each lubricant drain channel may be configured for capturing lubricant that has passed by or through components of the gearing and returning it to the sump. By removing excess lubricant from the housing and the components accommodated therein, lubricant level in the housing is further lowered, resulting in high overall efficiency.

In an embodiment, the lubrication system comprises a lubricant temperature determination unit. The lubrication system is configured to determine a lubricant temperature. The determination may be based on a direct measurement of lubricant temperature or an estimation thereof. For example, the lubrication system may be provided with a lubricant temperature sensor for measuring lubricant temperature. The lubrication system is further configured to perform a passive lubrication operation, in which the lubricant pump is not operated, as long as the lubricant temperature is below a threshold temperature. The threshold temperature may correspond to a temperature, below which the lubricant pump cannot be operated at all or can only be operated at a greatly reduced efficiency. The threshold temperature may be between -10°C to -50°C, for example -30°C. Since the lubrication system is configured for collecting churned lubricant and is able to lubricate the torque distribution gearing in a passive manner as described above, proper lubrication and high efficiency can be achieved even when the lubricant pump is rendered inoperable. The lubrication system is further configured to perform an active lubrication operation, in which the lubricant pump is operated, as long as the lubricant temperature is above the threshold temperature. When the lubricant temperature is above the threshold temperature, operating the lubricant pump in the active lubrication operation results in improved lubrication and reduced churning losses, as described above. Therefore, overall efficiency is high.

In an embodiment, the torque distribution gearing comprises a first planetary gear set and a second planetary gear set. The first planetary gear set comprises at least a first element, a second element and a third element. The second planetary gear set comprises at least a first element, a second element and a third element. The input shaft is non-rotatably connected to the first element of the first planetary gear set. The second element of the first planetary gear set is non-rotatably connected to the first output shaft. The third element of the first planetary gear set is non-rotatably connected to the first element of the second planetary gear set. The second element of the second planetary gear set is connected to the housing. The third element of the second planetary gear set is non-rotatably connected to the second output shaft.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. The respective planetary gear set may be a plus or a minus planetary gear set. Each of the planetary gear sets may have planetary gears that may be rotatably mounted on the respective planetary carrier of the one planetary gear set. The planetary gears may mesh with both the sun gear and the ring gear of the respective planetary gear set. With such a configuration of the torque distribution gearing, the two planetary gear sets may be arranged one behind the other in an axial direction. Such an axially stacked configuration makes it possible to provide a torque distribution gearing with an axially stacked configuration that is compact, especially in the radial direction. In an alternative embodiment, the two planetary gear sets of the torque distribution gearing may be arranged one behind the other in the radial direction, but at the same axial height. Such a radially stacked configuration enables a torque distribution gearing that is particularly compact, especially in the axial direction.

Furthermore, one of the elements of the first planetary gear set corresponds to the above-described rotating element and one of the elements of the second planetary gear set corresponds to the above-described further rotating element. For example, the rotating element may be a ring gear of the first planetary gear set. For example, the further rotating element may be a ring gear of the second planetary gear set. The foregoing descriptions are applicable regardless of whether an axially stacked or radially stacked configuration is provided. The further rotating element may have a larger outer diameter than the rotating element. Utilizing elements of planetary gear sets as the rotating elements for churning lubricant improves overall efficiency of the torque distribution gearing.

In a second aspect, the present disclosure relates to a vehicle. The vehicle comprises a torque distribution gearing according to the first aspect. The respective advantages and further features can be taken from the description of the first aspect, wherein embodiments of the first aspect also form embodiments of the second aspect and vice versa.

In a third aspect, the present disclosure relates to a method for controlling a lubrication system for a torque distribution gearing of a vehicle. The method comprises a step of determining a lubricant temperature. The method comprises a step of performing a passive lubrication operation, in which a lubricant pump is not operated, as long as the lubricant temperature is below a threshold temperature. The method comprises a step of performing an active lubrication operation, in which the lubricant pump is operated, as long as the lubricant temperature is above the threshold temperature. The respective advantages and further features can be taken from the description of the first or second aspect, wherein embodiments of the first or second aspect also form embodiments of the third aspect and vice versa.

### Brief description of drawings

Figure 1 shows a vehicle with a torque distribution gearing according to an embodiment of the present disclosure.
Figure 2 schematically shows a general layout of the torque distribution gearing of the vehicle of Figure 1.
Figure 3 schematically shows the torque distribution gearing shown in Figure 2 with a lubrication system according to an embodiment.
Figure 4 schematically shows a passive lubrication operation of the torque distribution gearing with the lubrication system shown in Figure 3.
Figure 5 schematically shows an active lubrication operation of the torque distribution gearing with the lubrication system shown in Figure 3.
Figure 6 shows a constructional detail of the torque distribution gearing according to an embodiment of the present disclosure.
Figure 7 shows a method for controlling the lubrication system of the torque distribution gearing according to an embodiment of the present disclosure.

### Detailed description of embodiments

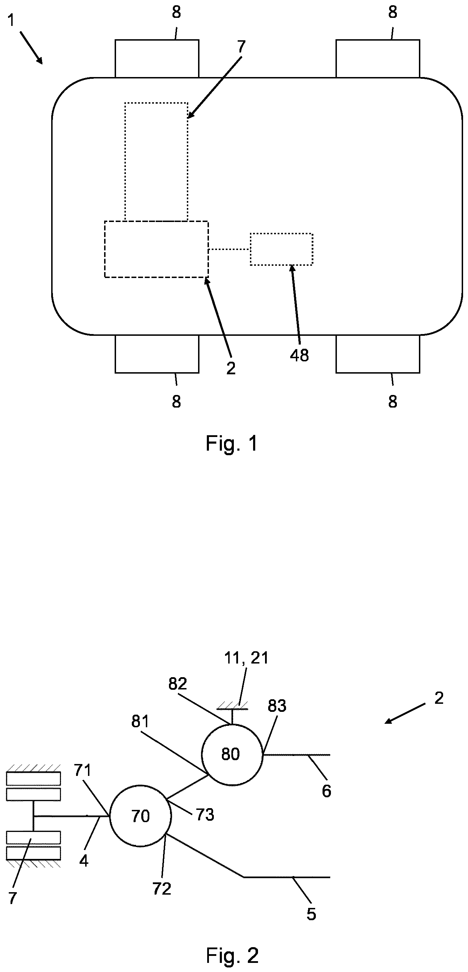

Figure 1 shows a vehicle 1 with a torque distribution gearing 2 according to an embodiment of the present disclosure. The torque distribution gearing 2 is driven by a driving unit 7 and is configured for distributing torque input by the driving unit 7 to at least two drive elements 8. In the present embodiment, the driving unit 7 is an electrical motor, and the drive elements 8 are wheels of the vehicle 1. The torque distribution gearing 2 further comprises a sensor 48 that is part of a lubricant temperature determination unit described later.

Figure 2 schematically shows a general layout of the torque distribution gearing 2 according to an embodiment of the present disclosure. The torque distribution gearing 2 is a torque distribution gearing with two planetary gear sets. As can be seen from Figure 2, the torque distribution gearing 2 comprises a first planetary gear set 70 having a first element 71, a second element 72 and a third element 73. Furthermore, the torque distribution gearing 2 comprises a second planetary gear set 80 having a first element 81, a second element 82 and a third element 83. A torque of the driving unit 7 can be introduced into the torque distribution gearing 2 via the first element 71 of the first planetary gear set 70. For this purpose, an input shaft 4 driven by the driving unit 7 is mechanically operatively connected to the first element 71 of the planetary gear set 70, here permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member, here a housing 11, 21. A first output shaft 5 is mechanically operatively connected to the second element 72 of the first planetary gear set 70, in this case permanently non-rotatably connected. A second output shaft 6 is mechanically operatively connected to the third element 83 of the second planetary gear set 80, in this case permanently non-rotatably connected.

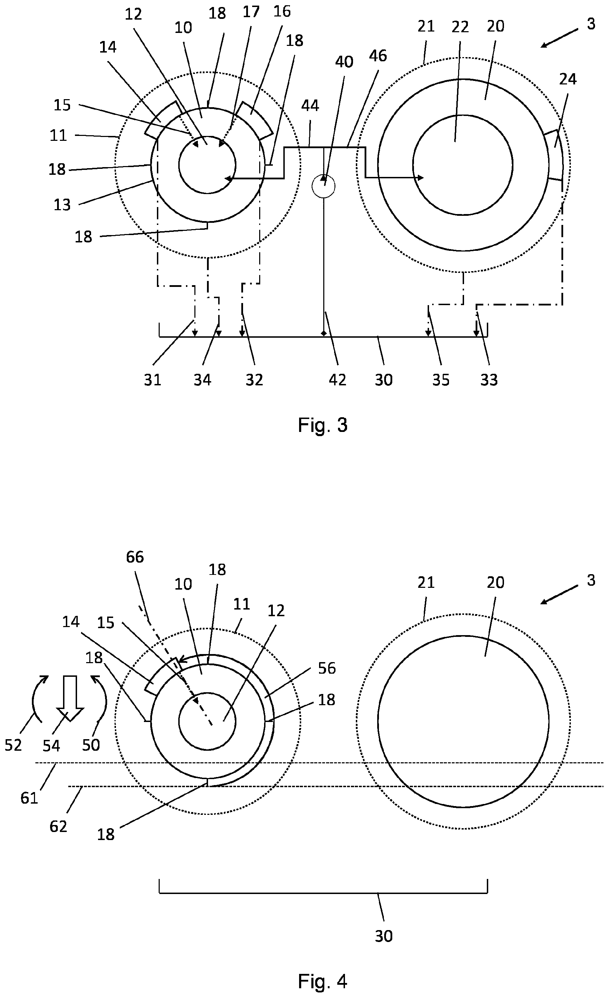

Figure 3 schematically shows a lubrication system 3 of the torque distribution gearing 2 shown in Figure 2. The lubrication system 3 is configured for lubricating the planetary gear sets 70, 80 of the torque distribution gearing 2. In the embodiment of Figure 3, with respect to the first planetary gear set 70, the first element 71 is a sun gear, the second element 72 is a planetary carrier and the third element 73 is a ring gear. With respect to the second planetary gear set 80, the first element 81 is a sun gear, the second element 82 is a planetary carrier and the third element 83 is a ring gear. For facilitating understanding, Figure 3 concentrates on features pertaining to a rotating element 10 and a further rotating element 20. The rotating element 10 corresponds to the ring gear 73. The further rotating element 20 corresponds to the ring gear 83. The rotating element 10 is accommodated in a housing 11. The further rotating element 20 is accommodated in a housing 21. The housings 11, 21 are attached to each other and are attached to a housing (not shown) of the driving unit 7. In an alternative embodiment, the housings 11, 21 are integrally formed.

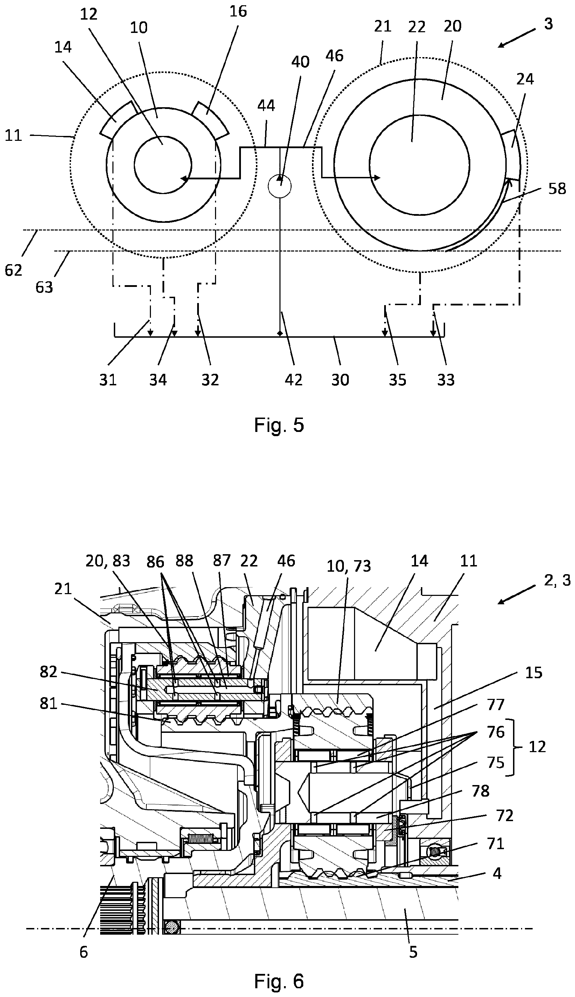

The lubrication system 3 comprises a first chamber 14 and a second chamber 16. The first and second chambers 14, 16 are provided radially adjacent to the rotating element 10. In the present embodiment, the first and second chambers 14, 16 are axially and circumferentially offset to each other. The first chamber 14 is configured for collecting lubricant churned by the rotating element 10 as it rotates in a first direction 50 shown in Figure 4. The second chamber 16 is configured for collecting lubricant churned by the rotating element 10 as it rotates in a second direction 52 shown in Figure 4. The rotating element 10 comprises optional churning structures 18 for increasing the churning rate of the rotating element 10. The churning structures 18 are formed as blades on a lubricant facing surface 13, i.e. radially outer surface, of the rotating element 10. The first chamber 14 is connected via a first channel 15 to a lubricant distribution unit 12, which is described later with reference to Figure 6. The second chamber 16 is connected via a second channel 17 to the lubricant distribution unit 12.

The lubrication system 3 comprises a further chamber 24 for collecting lubricant churned by the further rotating element 20 as it rotates regardless of the direction of rotation. The lubrication system 3 comprises a further lubricant distribution unit 22, which is described later with reference to Figure 6. The lubrication system 3 further comprises a lubricant pump 40 for pumping lubricant from a sump 30 via a pump inlet 42. The sump 30 is in fluid communication with an internal volume of the housings 11, 21. Lubricant from the first chamber 14 drains to the sump 30 via a lubricant drain channel 31. Lubricant from the second chamber 16 drains to the sump 30 via a lubricant drain channel 32. Lubricant from the further chamber 24 drains to the sump 30 via a lubricant drain channel 33. Lubricant from the housing 11 of the rotating element 10 drains to the sump 30 via a lubricant drain channel 34. Lubricant from the housing 21 of the further rotating element 20 drains to the sump 30 via a lubricant drain channel 35. The lubricant pump 40 supplies lubricant to the lubricant distribution unit 12 via a supply channel 44. The lubricant pump 40 supplies lubricant to the further lubricant distribution unit 22 via a supply channel 46.

Figure 4 schematically shows a passive lubrication operation of the lubrication system 3. For facilitating understanding, only features relevant to the following descriptions are shown, while other features shown in Figure 3 are omitted from illustration in Figure 4. The passive lubrication operation is performed when the lubricant pump 40 cannot be operated, for example due to low temperatures. When the vehicle 1 and the torque distribution gearing 2 have been inoperable for an extended period of time, lubricant has settled in the housings 11, 21 and the sump 30 at a first lubricant level 61 under the influence of gravity in a gravity direction 54. At the first lubricant level 61, the rotating element 10 is partly covered by the lubricant. When operation of the torque distribution gearing 2 starts, the rotating element 10 may rotate in the first direction 50 or the second direction 52. Figure 4 depicts an example of the rotating element 10 rotating in the first direction 50.

As the rotating element 10 rotates in the first direction 50, the rotating element 10 churns lubricant in the housing 11 due to being partly covered by the lubricant. As a result, a lubricant flow 56 is created by at least parts of the churned lubricant. A churning rate is increased by the optional churning structures 18. The lubricant flow 56 follows the rotation of the rotating element 10 in a circumferential direction of the rotating element 10 until it reaches the first chamber 14, where it is collected. Accordingly, lubricant is removed from the inner volume of the housings 11, 21 and moved to the first chamber 14. As a result, a lubricant level in the housings 11, 21 is reduced in correspondence with the removed lubricant volume. At an equilibrium between lubricant volume removed and lubricant volume added, e.g. by draining, a second lubricant level 62 is reached. In the present embodiment, the torque distribution gearing 2 is configured such that the second lubricant level 62 is a lubricant level, at which the rotating element 10, including the optional churning structures 18 provided thereon, is no longer covered by the lubricant. The first chamber 14 is configured to collect a volume of lubricant that corresponds at least to the difference in lubricant volume between the first lubricant level 61 and the second lubricant level 62 before allowing lubricant to flow via the first channel 15 to the lubricant distribution unit 12. Thus, due to the sufficiently large usable volume of the first chamber 14, it is possible to ensure that the lubricant level drops below the rotating element 10. Hence, at the second lubricant level 62, lubricant is no longer churned by the rotating element 10. Furthermore, since the further rotating element 20 is immersed to a lesser extent due to the drop in lubricant level, churning losses of the further rotating element 20 are also reduced. In summary, during the passive lubrication operation, churning losses by the rotating element 10 are eliminated and churning losses by the further rotating element 20 are minimized.

Figure 5 schematically shows an active lubrication operation of the lubrication system 3. For facilitating understanding, only features relevant to the following descriptions are shown, while other features shown in Figure 3 are omitted from illustration in Figure 5. During the active lubrication operation, the lubricant pump 40 is driven. Thereby, lubricant from the sump 30 is pumped through the pump inlet 42, the lubricant pump 40 and the supply channels 44, 46 into the lubricant distribution unit 12 of the rotating element 10 and the further lubricant distribution unit 22 of the further rotating element 20. As a result, lubricant is removed from the sump 30 and the housings 11, 21. This effect is dependent on the pumped lubricant volume. Furthermore, the rotation of the further rotating element 20 churns lubricant, resulting in a lubricant flow 58 from the inner volume of the housings 11, 21 into the further chamber 24, thereby removing additional lubricant. This effect is dependent on a churning rate of the further rotating element 20. On the other hand, lubricant drains to the sump 30 via the lubricant drain channels 31, 32, 33, 34 and 35, thereby adding lubricant back into the sump 30. This effect is dependent on the specific configuration, e.g. diameters, of the lubricant drain channels 31, 32, 33, 34, 35. According to the interactions of the above-described effects, the lubricant level reaches a new equilibrium at a third lubricant level 63. The lubrication system 3 is configured such that the third lubricant level 63 is a level at which the further rotating element 20 is not covered by the lubricant. Thereby, during the active lubrication operation, churning losses by the further rotating element 20 are eliminated.

Figure 6 shows a constructional detail of the torque distribution gearing 2 and the lubrication system 3. The depiction of Figure 6 corresponds to a sectional view along the first channel 15 as indicated by a section line 66 in Figure 4. The lubrication system 3 comprises the lubricant distribution unit 12 and the further lubricant distribution unit 22. The lubricant distribution unit 12 comprises a baffle 75 attached to the planetary carrier 72 and distribution channels 76 formed in a pin 78 of the planetary carrier 72. Lubricant churned by the rotating element 10, i.e. the ring gear 73, is collected by the first chamber 14 and supplied via the first channel 15 to the baffle 75 of the lubricant distribution unit 12. The lubricant can flow from the baffle 75 via the distribution channels 76 to other parts of the first planetary gear set 70, for example to a planetary bearing 77. It is noted that lubricant also may be supplied to the lubricant distribution unit 12 by the second channel 17 or the supply channel 44, which are not shown in Figure 6. The further lubrication unit 22 is formed as an annular member attached to the housing 21 and provided with the supply channel 46. The supply channel 46 supplies lubricant to distribution channels 86, 88 formed in the planetary carrier 82 of the second planetary gear set 80, for example for lubricating a planetary bearing 87.

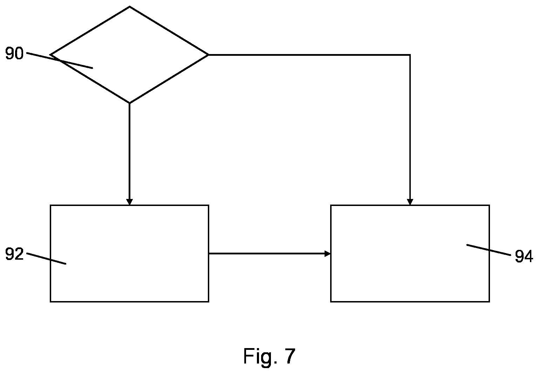

Figure 7 shows a method for controlling the lubrication system 3. The control is carried out at regular intervals, optionally continuously, during operation of the torque distribution gearing 2. In a determination step 90, a lubricant temperature is determined. In the present embodiment, the determination is performed by means of the sensor 48. The sensor 48 is a temperature sensor that measures a temperature of the lubricant. If it is determined in step 90 that the lubricant temperature is below a threshold temperature, for example -30°C, the lubrication system 3 performs a passive lubrication operation 92 as described above, in which the lubricant pump 40 is not operated. The passive lubrication operation 92 may be maintained as long as the lubricant temperature is below the threshold temperature. If it is determined in the determination step 90 that the lubricant temperature is above the threshold temperature, the lubrication system 3 performs an active lubrication operation 94 as described above, in which the lubricant pump 40 is operated. The active lubrication operation 94 may be maintained as long as the lubricant temperature is above the threshold temperature.

### Reference signs

- 1: vehicle
- 2: torque distribution gearing
- 3: lubrication system
- 4: input shaft
- 5, 6: output shaft
- 7: driving unit
- 8: drive element
- 10: rotating element
- 11: housing
- 12: lubricant distribution unit
- 13: lubricant facing surface
- 14: first chamber
- 15: first channel
- 16: second chamber
- 17: second channel
- 18: churning structure
- 20: further rotating element
- 21: housing
- 22: further lubricant distribution unit
- 24: further chamber
- 30: sump
- 31, 32, 33, 34, 35: lubricant drain channel
- 40: lubricant pump
- 42: pump inlet
- 44, 46: supply channel
- 48: sensor
- 50: first direction
- 52: second direction
- 54: gravity direction
- 56, 58: lubricant flow
- 61: first lubricant level
- 62: second lubricant level
- 63: third lubricant level
- 66: section line
- 70: first planetary gear set
- 71: first element
- 72: second element
- 73: third element
- 75: baffle
- 76: distribution channel
- 77: planetary bearing
- 78: pin
- 80: second planetary gear set
- 81: first element
- 82: second element
- 83: third element
- 86, 88: distribution channel
- 87: planetary bearing
- 90: determination
- 92: passive lubrication operation
- 94: active lubrication operation

## Claims

1. A torque distribution gearing (2) for a vehicle (1), the torque distribution gearing (2) being configured to distribute a torque of an input shaft (4) between a first output shaft (5) and a second output shaft (6) and comprising a rotating element (10), a housing (11, 21) accommodating the rotating element (10) and a lubrication system (3) for collecting lubricant of the torque distribution gearing (2) churned by the rotating element (10) as the rotating element (10) rotates so as to change a lubricant level in the housing (11, 21) from a first lubricant level (61) to a second lubricant level (62), the first lubricant level (61) being a lubricant level at which a lubricant volume present in the housing (11, 21) settles under the influence of gravity when the torque distribution gearing (2) is inoperative for an extended period of time, wherein the lubricant at the first lubricant level (61) at least partially covers the rotating element (10), and wherein the lubricant at the second lubricant level (62) covers the rotating element (10) less than at the first lubricant level (61).

2. The torque distribution gearing (2) according to claim 1, **characterized in that** the rotating element (10) comprises a churning structure (18) formed at a lubricant facing surface (13) of the rotating element (10), the churning structure (18) being configured to increase a churning rate caused by rotation of the rotating element (10).

3. The torque distribution gearing (2) according to claim 1 or 2, **characterized in that** the lubricant at the second lubricant level (62) does not cover the rotating element (10).

4. The torque distribution gearing (2) according to claim 3, **characterized in that** the lubrication system (3) comprises a first chamber (14) for collecting the lubricant churned by the rotating element (10) as the rotating element (10) rotates in a first direction (50), a lubricant distribution unit (12) for distributing the lubricant from the first chamber (14), and a first channel (15) for supplying the lubricant from the first chamber (14) to the lubricant distribution unit (12), wherein a usable volume of the first chamber (14) before lubricant flows into the first channel (15) is equal to or greater than a change in the lubricant volume present in the housing (11, 21) between the first lubricant level (61) and the second lubricant level (62).

5. The torque distribution gearing (2) according to claim 4, **characterized in that** the lubrication system (3) comprises a second chamber (16) for collecting lubricant churned by the rotating element (10) as the rotating element (10) rotates in a second direction (52), and a second channel (17) for supplying lubricant from the second chamber (16) to the lubricant distribution unit (12).

6. The torque distribution gearing (2) according to any of the preceding claims, **characterized in that** the lubrication system (3) comprises a sump (30) for receiving lubricant, the sump (30) being separate from the housing (11, 21) and in fluid communication with the housing (11, 21).

7. The torque distribution gearing (2) according to claim 4 or 5 and according to claim 6, **characterized in that** the lubrication system (3) comprises a lubricant pump (40) for pumping lubricant from the sump (30) and a supply channel (44) for supplying lubricant from the lubricant pump (40) to the lubricant distribution unit (12).

8. The torque distribution gearing (2) according to claim 6 or 7, **characterized in that** the torque distribution gearing (2) comprises a further rotating element (20), and the lubrication system (3) comprises a further chamber (24) for collecting lubricant churned by the further rotating element (20) as the further rotating element (20) rotates and a lubricant drain channel (33) for draining lubricant from the further chamber (24) into the sump (30).

9. The torque distribution gearing (2) according to claim 8, **characterized in that** the lubrication system (3) comprises a further supply channel (46) for supplying lubricant from the lubricant pump (40) to a further lubricant distribution unit (22) for distributing lubricant to the further rotating element (20).

10. The torque distribution gearing (2) according to claim 8 or 9, **characterized in that** the lubricant pump (40), the further chamber (24) and the lubricant drain channel (33) are configured to interact so as to change a lubricant level in the housing (11, 21) to a third lubricant level (63), the third lubricant level (63) being a lubricant level at which the lubricant does not cover the further rotating element (20).

11. The torque distribution gearing (2) according to any one of claims 6 to 10, **characterized in that** the lubrication system (3) comprises a further lubricant drain channel (31, 32, 34, 35) for draining lubricant into the sump (30) from at least one of the first chamber (14), the second chamber (16), a housing (11) accommodating the rotating element (10) and a housing (21) accommodating the further rotating element (20).

12. The torque distribution gearing (2) according to any one of claims 7 to 11, **characterized in that** the lubrication system (3) comprises a lubricant temperature determination unit (48), wherein the lubrication system (3) is configured to
- determine (90) a lubricant temperature,
- perform a passive lubrication operation (92), in which the lubricant pump (40) is not operated, as long as the lubricant temperature is below a threshold temperature, and
- perform an active lubrication operation (94), in which the lubricant pump (40) is operated, as long as the lubricant temperature is above the threshold temperature.

13. The torque distribution gearing (2) according to any one of the preceding claims, **characterized by** comprising a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the first output shaft (5), the third element (73) of the first planetary gear set (70) is non-rotatably connected to the first element (81) of the second planetary gear set (80), the second element (82) of the second planetary gear set (83) is non-rotatably connected to the housing (11, 21), and the third element (23) of the second planetary gear set (80) is non-rotatably connected to the second output shaft (6), and wherein one of the elements (71; 72; 73) of the first planetary gear set (70) corresponds to the rotating element (10) and one of the elements (81; 82; 83) of the second planetary gear set (80) corresponds to the further rotating element (20).

14. Vehicle (1) comprising a torque distribution gearing (2) according to any one of the preceding claims.

15. Method for controlling a lubrication system (3) for a torque distribution gearing (2) of a vehicle (1), comprising the steps:
- determining (90) a lubricant temperature,
- performing a passive lubrication operation (92), in which a lubricant pump (40) is not operated, as long as the lubricant temperature is below a threshold temperature, and
- performing an active lubrication operation (94), in which the lubricant pump (40) is operated, as long as the lubricant temperature is above the threshold temperature.
